# EUROPÄISCHE PATENTSCHRIFT

(11) **EP 3 390 132 B1**
(45) Veröffentlichungstag und Bekanntmachung des Hinweises auf die Patenterteilung: **21.07.2021**
(21) Anmeldenummer: 16819293.8
(22) Anmeldetag: 12.12.2016
(51) Int. Cl.: B60K 35/00, B60K 37/02, G02B 27/01

(54) **VERFAHREN, COMPUTERPROGRAMM UND SYSTEM ZUR DARSTELLUNG EINER BILDINFORMATION FÜR EINEN ZWEIRADFAHRER**
METHOD, COMPUTER PROGRAM AND SYSTEM FOR PRESENTING IMAGE INFORMATION FOR A CYCLIST
PROCÉDÉ, PROGRAMME INFORMATIQUE ET SYSTÈME PERMETTANT DE REPRÉSENTER UNE INFORMATION SOUS FORME D'IMAGE DESTINÉE À UN CONDUCTEUR DE DEUX ROUES

(30) Priorität: 16.12.2015 DE 102015225371
(43) Veröffentlichungstag der Anmeldung: 24.10.2018
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2016/080617
(87) Internationale Veröffentlichungsnummer: WO 2017/102636

(56) Entgegenhaltungen:
- EP-A1- 1 510 849
- DE-A1-102012 218 837
- HIMBERG H ET AL: "Head Orientation Prediction: Delta Quaternions Versus Quaternions", IEEE TRANSACTIONS ON SYSTEMS, MAN AND CYBERNETICS. PART B:CYBERNETICS, IEEE SERVICE CENTER, PISCATAWAY, NJ, US, vol. 39, no. 6, 1 December 2009 (2009-12-01), pages 1382-1392, XP011293833, ISSN: 1083-4419

## Beschreibung

Die Erfindung betrifft ein Verfahren und ein System zur Darstellung einer Bildinformation für einen Fahrer eines Zweirads, mittels einer am Kopf des Fahrers tragbaren Vorrichtung.

Ein solches Verfahren kann beispielsweise unter Verwendung eines Motorradhelms verwirklicht sein, das über eine Anzeigeeinheit, z.B. ein sog. Head-up-Display, verfügt. Dabei nimmt z.B. eine im Helm verbaute Kamera eine Ansicht der Umgebung des Helmes auf, die dann in das Sichtfeld des Trägers des Motorradhelms eingeblendet wird. Die Kopfposition des Fahrers eines Zweirads verändert ihre Position beim Fahren sehr stark. Dadurch erscheint die im Motorradhelm erzeugte Head-up-Anzeige relativ zum Motorrad und auch relativ zur Umgebung stets an unterschiedlichen Stellen. Dadurch, dass sich die virtuelle Anzeige in dem Head-up-Display zusammen mit dem Motorradhelm bewegt, kann ein beliebiges, relevantes Objekt durch die virtuelle Anzeige verdeckt werden.

Die DE 10 2012 218 837 A1 offenbart ein Verfahren zum Anzeigen einer Darstellung entweder auf einem Head-up Display oder einem Head-mounted Display. Die Zuweisung einer Darstellung zu einem der Displays kann berücksichtigen, auf welcher der beiden Displays die Anzeige für den Benutzer vorteilhafter ist. Ein Kriterium kann hier unter anderem die Richtung sein, in die ein Benutzer blickt. Eine Kopfdrehung des Benutzers wird über ein Head-Tracking System erfasst.

Die EP 1 520 849 A1 offenbart eine tragbare Display-Vorrichtung für die Verwendung in einem Fahrzeug, die dazu ausgebildet ist, eine optische Information relativ zu einem Fahrzeugteil an einem bestimmten Ort darzustellen, ähnlich wie dies bei einem Instrumententräger der Fall ist.

Es ist Aufgabe der vorliegenden Erfindung, ein Verfahren und ein System zur Darstellung einer Bildinformation für einen Fahrer eines Zweirads, anzugeben, durch welche der Fahrer bei der Interpretation der dargestellten Bildinformation diese verbessert wahrnehmen kann.

Diese Aufgaben werden gelöst durch ein Verfahren gemäß den Merkmalen des Anspruches 1, ein Computerprogrammprodukt gemäß den Merkmalen des Patentanspruches 15 und ein System zur Darstellung einer Bildinformation für einen Fahrer eines Fahrzeugs gemäß den Merkmalen des Patentanspruches 16. Vorteilhafte Ausgestaltungen ergeben sich aus den abhängigen Patentansprüchen.

Gemäß einem ersten Aspekt der Erfindung wird ein Verfahren zur Darstellung einer Bildinformation für einen Fahrer eines Zweirads, mittels einer am Kopf des Fahrers tragbaren Vorrichtung vorgeschlagen. Bei dem Verfahren wird eine Position der dargestellten Bildinformation innerhalb eines Anzeigebereichs der Vorrichtung abhängig von der relativen Position des Kopfes des Fahrers zu einem bestimmten Teil des Fahrzeugs hinsichtlich der wahrgenommenen Tiefe derart variiert, dass die von dem Fahrer wahrgenommene Position der dargestellten Bildinformation, insbesondere zumindest eines Anzeigeelements, innerhalb des Anzeigebereichs relativ zu dem bestimmten Teil des Fahrzeugs einen vorgegebenen, von dem Fahrer wahrnehmbaren, räumlichen Zusammenhang bildet und im Wesentlichen konstant bleibt.

Das Zweirad kann ein motorisiertes Zweirad, wie z.B. ein Motorroller, ein Motorrad oder ein Mofa, aber auch ein Fahrrad, wie z.B. ein Pedelec oder E-Bike sein. Ein Fahrzeug kann darüber hinaus auch eine entsprechende oder sinngemäße Weiterbildung der oben genannten Arten an Fortbewegungsmitteln sein.

Bei dem bestimmten Teil des Fahrzeugs kann es sich um eine physikalisch ausgestaltete Anzeigeeinheit, insbesondere ein sog. Kombi-Instrument, des Zweirads oder einen Lenker des Zweirads oder ein mit dem Lenker des Zweirads fest verbundenes Teil handeln.

Das Verfahren ermöglicht den Ausgleich auch eines komplexen Bewegungsablaufs zwischen dem bestimmten Teil des Fahrzeugs, wie dem verdrehbaren Lenker des Zweirads samt Kombi-Instrument, und dem Kopf des Fahrers. Ebenso kann der Bewegungsablauf durch eine bestimmte, gewünschte Abhängigkeit ersetzt werden.

Ist das Fahrzeug ein Fahrrad, ein E-Bike, ein Pedelec oder dergleichen, bei dem die Vorrichtung in einem Fahrradhelm vorgesehen ist, wird das bislang mit wenigen oder ohne Anzeigeinstrumente versehene Fahrrad mit einem beliebig gestaltbaren, mit dem Lenker virtuell verbindbaren Kombi-Instrument erweitert.

Die Darstellung der Bildinformation erfolgt vorzugsweise mittels einer am Kopf des Fahrers des Fahrzeugs tragbaren Vorrichtung. Die Vorrichtung kann insbesondere in einem Motorradhelm oder einem Fahrradhelm und dergleichen vorgesehen sein. Die Vorrichtung kann auch eine mit dem Motorradhelm oder dem Fahrradhelm verbundene separate Einheit darstellen. Es sind jedoch auch solche, am Kopf des Fahrers tragbaren Vorrichtungen umfasst, welche die Bildinformation in eine vom Fahrer getragene Brille (z.B. Google Glasses und dergleichen) einblenden können. Allgemein kann es sich um eine zusätzlich zu einer Schutzvorrichtung (Motorradhelm oder Fahrradhelm) tragbare Datenbrille handeln. Die tragbare Vorrichtung ist insbesondere zum Datenaustausch mit dem Fahrzeug und/oder einem mitgeführten mobilen Anwendergerät ausgestaltet, so dass nachfolgend näher beschriebene messtechnisch erfasste Daten zwischen den Komponenten ausgetauscht und, z.B. zentralisiert, verarbeitet werden können.

Durch das Verfahren wird mit Hilfe der am Kopf des Fahrers tragbaren Vorrichtung die darzustellende Bildinformation derart erzeugt, dass diese einen vorgegebenen, räumlichen Zusammenhang mit z.B. einer realen Instrumentenanzeige des Fahrzeugs bildet. Dadurch kann die auch als physikalisches Kombi-Instrument bezeichnete Instrumentenanzeige, welche in der Regel nur wenige, vorgeschriebene Anzeigen umfasst, durch ein oder mehrere, weitere Anzeigeelemente der dargestellten Bildinformation virtuell fortgesetzt werden.

Der Fahrer des Fahrzeugs kann innerhalb vorgegebener Freiheitsgrade seinen Kopf bewegen, wobei die wahrgenommene Position virtueller Anzeigeelemente relativ zu den physikalischen Anzeigen der Instrumentenanzeige weitgehend unbeweglich bleibt. Die in der Bildinformation enthaltenen virtuellen Anzeigeelemente "haften" dabei in der Wahrnehmung des Fahrers virtuell, z.B. bündig ergänzend, an den physikalischen Anzeigen der realen Instrumentenanzeige. Dadurch finden aus Sicht des Fahrers keine Überlagerung sowie keine gegenseitige Bewegung der physikalischen und der virtuellen Anzeigeelemente zueinander statt. Dies kann die Wahrnehmung des Fahrers, z.B. durch den Entfall einer auf die Dauer sehr ermüdend wirkenden Separierung von beweglichen und unbeweglichen Objekten in der Wahrnehmung des Fahrers, entlasten.

Besonders bevorzugt kann dabei die Bildinformation derart dargestellt werden, dass diese zumindest in Bezug auf eine horizontale Achse und/oder vertikale Achse und/oder Drehung unmittelbar anschließend an einen physikalischen Teil des Fahrzeugs, bevorzugt an die physikalische Instrumentenanzeige eines Zweirads, dargestellt und entsprechend nachgeführt wird. Bei einer derartigen unmittelbar anschließender Darstellung wird dem Fahrer auch der Anblick auf einen (zwischen der physikalischen Instrumentenanzeige und der dargestellten Bildinformation liegenden), sich schnell bewegenden Umgebungsabschnitts erspart.

Das Verfahren zur Darstellung der Bildinformation mittels der am Kopf des Fahrers tragbaren Vorrichtung kann durch folgende Schritte implementiert werden: Ermitteln einer relativen Position des Kopfes des Fahrers zu einem bestimmten Teil, insbesondere der Instrumentenanzeige, des Fahrzeugs zu mehreren Zeitpunkten; Ermitteln einer Steuerungsinformation zum Variieren der Position der dargestellten Bildinformation (insbesondere zumindest eines Anzeigeelements) innerhalb des Anzeigebereichs der tragbaren Vorrichtung in Abhängigkeit von einer oder mehreren ermittelten Positionen des Kopfes des Fahrers zu dem bestimmten Teil des Fahrzeugs; und Variieren der Position des Anzeigeelements innerhalb des Anzeigebereichs der Vorrichtung, abhängig von den ermittelten Steuerungsinformationen, so dass sich der vorgegebene, wahrgenommene, räumliche Zusammenhang zu dem bestimmten Teil des Fahrzeugs ergibt.

Die ermittelten Steuerungsinformationen können abhängig sein von einer zeitlichen Frequenz aus mehreren Positionsdaten, welche z.B. Positionsabweichungen repräsentieren. Die Steuerungsinformationen können auch abhängig sein von Bewegungsparametern, d.h. bewegungsabhängigen Parametern des Kopfes des Fahrers.

Das Variieren der Position der Bildinformation bzw. zumindest eines Anzeigeelements der Bildinformation, innerhalb des Anzeigebereichs der tragbaren Vorrichtung kann mittels einer gezielten Auswahl eines Anzeigewinkels und/oder Pixel- bzw. Pixelbereichen der Anzeigevorrichtung erfolgen, die zur Erzeugung der Anzeige abhängig von der ermittelten Steuerungsinformation angesteuert werden.

Ein Anzeigeelement der Bildinformation ist z.B. ein bestimmter Inhalt wie ein Teil einer Navigations-Karte, ein Tachometer, eine Handlungsanweisung (wie z.B. an sich bekannte Check-Control-Meldungen). Die Bildinformation bzw. das oder die Anzeigeelemente können bevorzugt über ein Head-up-Display oder ähnliches im Sichtfeld des Fahrers erzeugbar sein. Bevorzugt erfolgt dabei das Variieren der wahrgenommenen Position nur innerhalb vorgegebener Parameter. Einerseits kann dies mit einer kostengünstig ausgestalteten Vorrichtung erreicht werden. Andererseits können die Parameter derart eingeschränkt werden, dass bei einer starken bzw. schnellen Veränderung der Kopfposition eine gewünschte Veränderung der Anzeige erfolgt.

Besonders bevorzugt handelt es sich bei einem Anzeigeelement der Bildinformation um eine virtuelle Abbildung eines Anzeigeinstruments des Fahrzeugs. Beispielsweise kann ein solches Anzeigeinstrument einem erweiterten Umfang des Kombiinstruments des Fahrzeugs entsprechen. Dabei können die einem virtuellen Anzeigeinstrument zugrunde liegenden Messwerte auf Basis derselben oder sinngemäß entsprechenden Messgrößen des Fahrzeugs, z.B. des Antriebssystem des Fahrzeugs generiert werden, wie auch die Messgrößen für die physikalischen Anzeigeinstrumente. Beispielsweise kann die Bildinformation ein oder mehrere virtuell dargestellte Anzeigeinstrumente in Gestalt von (für Kraftfahrzeuge oder für Motorräder typischen) runden Anzeigen mit einer runden Skala und einem Zeiger ("Anzeigenadel") umfassen.

Ein Anzeigeelement kann als ein virtuelles Anzeigeinstrument auch eine (im Vergleich der physikalischen Anzeige) erweiterte Datenverarbeitung oder Visualisierung aufweisen. Alternativ oder zusätzlich kann die Bildinformation einen Teil der Umgebung des Fahrzeugs repräsentieren. Bevorzugt kann die Bildinformation einen nach vorausbestimmen Kriterien ausgewählten Teil der Umgebung des Fahrzeugs repräsentieren. Insbesondere kann die Bildinformation auch eine interpretierte Information über einen Teil der Umgebung des Fahrzeugs repräsentieren. Beispielsweise kann die Bildinformation eine symbolisch abgebildete Verkehrssituation, z.B. als eine Anordnung von Objekten in der Umgebung des Fahrzeugs, mit oder ohne einen bestimmten Bezug zu dem Fahrzeug repräsentieren.

Der vorgegebene wahrnehmbare, räumliche Zusammenhang kann sich auf Höhenposition und/oder Breitenposition und/oder Winkel und Tiefenposition zwischen dem bestimmten Teil des Fahrzeugs und der Bildinformation beziehen. Der wahrnehmbare, räumliche Zusammenhang kann hinsichtlich Höhenposition und/oder Breitenposition und/oder Winkel und/oder Tiefenposition unterschiedlich vorgegeben sein oder von unterschiedlichen weiteren Faktoren abhängig sein.

Die von dem Fahrer wahrgenommene Höhenposition, Breitenposition und Winkel der Bildinformation bzw. ihres oder ihrer Anzeigeelemente können derart variiert werden, dass die Bildinformation bzw. das oder die Anzeigeelemente trotz Kopfbewegungen des Fahrers eine im Wesentlichen stabil wahrgenommene Position, insbesondere als eine virtuelle Fortsetzung eines physikalischen Anzeigeinstruments annimmt und beibehält. Die wahrgenommene Tiefenposition kann dabei zusätzlich nach weiteren Kriterien variiert werden.

Der räumliche Zusammenhang kann mit einer zeitabhängigen Größe variiert werden. Zum Beispiel kann der räumliche Zusammenhang eine wahrgenommene Bewegung des Anzeigeelements, z.B. ein sanftes Nachführen oder Verändern der Position in einem Koordinatensystem des bestimmten Teils des Fahrzeugs, sein. Dies kann auch abhängig von einem Bedienvorgang oder weiteren frei definierbaren Bedingungen erfolgen.

Die Bildinformation kann aus einem oder mehreren Anzeigeelementen bestehen, die z.B. einen Zustand der Fahrzeugsysteme, eine Geschwindigkeitsinformation, eine Drehzahlinformation, eine Navigationsinformation, eine Fahrerassistenzinformation, Effizienzdaten oder Infotainment-Inhalte repräsentieren. Auch kann ein Anzeigeelement einen Teil der Umgebung des Fahrzeugs (z.B. ein Kamerabild, aus Sensordaten erzeugtes Abbild der Umgebung oder Objekte in der Umgebung) umfassen.

Bei der Erzeugung der Bildinformation können darüber hinaus die Daten eines Lenkradsensors berücksichtigt werden.

Die Bildinformation kann derart gestaltet werden, dass ihre wahrgenommene Tiefe bzw. die gefühlte Entfernung des Inhalts vor den Augen des Fahrers etwa gleich weit oder weiter oder näher als das bestimmte Teil des Fahrzeugs, wie die bereits erwähnte Instrumentenanzeige, wahrgenommen werden. Die Entfernung kann beispielsweise durch den Fahrer des Fahrzeugs wunschgemäß vorgegeben werden.

Die Bildinformation kann eine adaptive räumliche Anordnung mit unterschiedlich tief wahrgenommenen Anzeigeelementen der Bildinformation bilden. Wenn die Bildinformation oder ein bestimmtes Anzeigeelement in einer aktuellen Situation wichtiger ist oder wichtiger wird, tritt diese in der Wahrnehmung des Fahrers sprichwörtlich in den Vordergrund, indem beispielsweise die wahrgenommene Tiefe variiert wird. Sie kann alternativ an einen anderen Ort der Vorrichtung, z.B. in das zentrale Sichtfeld der Vorrichtung, verschoben werden.

Gemäß einer zweckmäßigen Ausgestaltung wird zumindest ein Parameter der relativen Position des Kopfes des Fahrers zu dem bestimmten Teil des Fahrzeugs mittels eines ersten Sensors, der zu dem bestimmten Teil gerichtet ist, ermittelt, wobei mit dem ersten Sensor das bestimmte Teil des Fahrzeugs erkannt wird. Der erste Sensor ist nach vorne, d.h. in Blickrichtung des Fahrers, gerichtet. Der erste Sensor kann eine Kamera sein, die in der Vorrichtung integriert ist oder an dieser, als separates Bauteil ausgeführt, befestigt ist.

Alternativ oder zusätzlich kann der zumindest eine Parameter der relativen Position des Kopfes des Fahrers zu dem bestimmten Teil des Fahrzeugs mittels eines zweiten Sensors, der zu dem Kopf des Fahrers hin gerichtet und mit dem Fahrzeug verbunden ist, ermittelt werden, wobei mit dem zweiten Sensor zumindest ein Teil der Vorrichtung und/oder des Kopfes des Fahrers erkannt wird. Der zweite Sensor kann beispielsweise eine Kamera sein, die vorzugsweise im Bereich des bestimmten Teils mit dem Fahrzeug verbunden ist.

In diesen beiden genannten Varianten kann das Verfahren derart ausgestaltet sein, dass Sensordaten, wie z.B. ein bestimmtes Muster zu einem Teil des Fahrzeugs, erfasst werden, wobei diese eingelernt werden oder die Grundlage von Lerndaten bilden. Das Verfahren kann alternativ oder zusätzlich derart ausgestaltet sein, dass der eingelernte Teil des Fahrzeugs bzw. der Vorrichtung als eine Referenz zum Ermitteln eines Parameters der relativen Position verwendet wird. Dabei kann das Einlernen des Teils des Fahrzeugs das Erfassen der Muster aus verschiedenen relativen Kopfpositionen erfolgen. Dies kann als Kalibrierungsvorgang betrachtet werden. Ebenso kann der naturwissenschaftliche Zusammenhang, nach dem die wahrgenommene Position relativ zu dem bestimmten Teil des Fahrzeugs erzeugt wird, eingelernt werden bzw. einlernbar gestaltet sein.

Gemäß einer weiteren zweckmäßigen Ausgestaltung kann der zumindest eine Parameter für den wahrnehmbaren, räumlichen Zusammenhang abhängig von einer Bedienhandlung des Fahrers festgelegt, insbesondere eingelernt, werden. Dabei kann das Einlernen eines oder mehrerer Parameter des wahrnehmbaren, räumlichen Zusammenhangs derart erfolgen, dass der Fahrer im Rahmen des Einlernvorgangs die gewünschte Position der Bildinformation bzw. des oder der Anzeigeelemente aus zumindest zwei unterschiedlichen relativen Kopfpositionen, z.B. mittels einer Bedienhandlung, festlegen kann. Insbesondere kann aus zumindest zwei derart festgelegten Parametern der räumliche Zusammenhang, z.B. als eine Funktion, Look-up-Tabelle, beispielsweise mittels eines Interpolationsverfahrens, für eine Vielzahl diverser relativer Position ermittelt und später angewandt werden.

Gemäß einer weiteren zweckmäßigen Ausgestaltung wird durch den ersten und/oder den zweiten Sensor eine bestimmte Markierung zumindest eines Teils des Fahrzeugs und/oder der Vorrichtung erfasst, wobei das Variieren der Position der Bildinformation innerhalb des Anzeigebereichs der Vorrichtung abhängig von der erkannten relativen Position der Markierung erfolgt. Beispielsweise kann eine kleine, in Sichtrichtung des Fahrers gerichtete Kamera der Vorrichtung eine spezielle Markierung, die an dem bestimmten Teil des Fahrzeugs (z.B. dem Kombi-Instrument) angebracht ist, erkennen. Eine solche Kamera kann sogleich natürlich auch für andere Zwecke genutzt werden. Dabei kann die Position der Anzeige derart verändert werden, dass sich ein gewünschter Nachführeffekt ergibt.

Diese Variante ist zweckmäßig, weil eine solche Markierung mit speziellem Muster bzw. Kontrasten versehen werden kann, die es erlauben, die Markierung verwechslungsfrei zu erkennen und ihre Position auch mit einfachen Mitteln zu bestimmen. Hierzu kann beispielsweise eine Bildserie mit Hilfe von Bildverarbeitungsalgorithmen analysiert werden. Zugleich kann mit Mitteln der Vorrichtung eine auf der Markierung gespeicherte Information ermittelt und berücksichtigt werden, insbesondere wenn die Markierung als ein maschinenlesbarer Code ausgestaltet ist. Die Anzeige kann auch abhängig von weiteren Informationen gesteuert werden, die in dem maschinenlesbaren Code repräsentiert ist.

Bei der relativen Position der Markierung kann es sich z.B. um einen oder mehrere Winkelparameter im Erfassungsfeld des Sensors handeln.

Gemäß einer weiteren zweckmäßigen Ausgestaltung wird die relative Position des Kopfes des Zweiradfahrers zu dem bestimmten Teil des Fahrzeugs, insbesondere der zumindest eine Parameter der relativen Position, durch eines oder mehrere der folgenden Erfassungsmittel ermittelt: einen Neigungssensor; einen globalen Positionssensor bzw. -geber; ein Mobilfunk-basiertes Positionierungssystem. Diese Alternative kann dann zur Anwendung gelangen, wenn die Vorrichtung über Mittel zur Positionsbestimmung, z.B. einen GPS-Empfänger, verfügt. Diese Variante kann ebenso dazu genutzt werden, wenn die Bewegungsparametern der Position des Kopfes des Fahrers und/oder des Fahrerblicks, in Bezug zu dem bestimmten Teil des Fahrzeugs, eine Veränderung der Anzeigeposition und/oder Form und/oder des Inhalts zumindest eines Teils der Bildinformation. Zweckmäßig ist es, abhängig von der Erkennung des Wunsches des Fahrers, nicht auf die Bildinformation bzw. ein Anzeigeelement zu schauen, oder abhängig davon, wenn davon auszugehen ist, dass der Fahrer eine bestimmte Information nicht wünscht oder nicht braucht, eine Veränderung der wahrgenommenen Position der Bildinformation erfolgt. Dies kann derart erfolgen, dass die Bildinformation bzw. das Anzeigeelement in ein anderes Teil des Sichtfelds verlagert wird. Alternativ oder zusätzlich kann eine Einschränkung der Inhalte der Bildinformation erfolgen. Dazu kann beispielsweise eine abstrahiertere Darstellung vorgesehen sein. Eine weitere Alternative besteht darin, dass Design der Bildinformation zu verändern, so dass insbesondere ein von der Bildinformation beanspruchter Sichtwinkel verringert wird.

In einer weiteren Ausgestaltung kann ein sog. Objekt-Tracking und/oder eine Bewegungsprädiktion angewandt werden. Dabei eilen die ermittelten Parameter oder die Steuerungsparameter zur Erzeugung der Bildinformation der tatsächlichen Bewegung um eine kurze Zeitspanne voraus. Mittels solcher Parameter kann eine prädiktive Anpassung der Position der Anzeige erfolgen. Somit ist gemäß der Erfindung vorgesehen, dass zumindest eine Bewegungs-Information zu einer relativen Kopfposition oder relativen Kopfbewegung des Fahrers zu dem bestimmten Teil des Fahrzeugs für die nahe Zukunft ermittelt und verarbeitet wird. Die Steuerungsinformation wird somit für einen Zeitpunkt in der nahen Zukunft derart ermittelt, dass die Auswirkungen der relativen Kopfposition und/oder Bewegung, die sich noch in der nahen Zukunft auswirken wird, berücksichtigt werden. Die nahe Zukunft kann sich dabei auf einen Zeithorizont von 0,1 s bis 5 s beziehen. Auch kann derart die Systemträgheit überwunden werden. Ebenso können schnelle kleine Bewegungen, z.B. Vibrationen, effektvoll unterdrückt, oder, falls gewünscht, verstärkt oder geändert werden.

Gemäß einer weiteren zweckmäßigen Ausgestaltung ist vorgesehen, dass der wahrnehmbare, räumliche Zusammenhang der wahrgenommenen Position der Bildinformation, insbesondere des zumindest einen Anzeigeelements, relativ zu dem bestimmten Teil des Fahrzeugs eine zeitverzögerte Nachführung der Position der Bildinformation zu der Position des bestimmten Teils des Fahrzeugs umfasst; und/oder abhängig von einer relativen Gemäß einer weiteren zweckmäßigen Ausgestaltung ist vorgesehen, dass der wahrnehmbare, räumliche Zusammenhang der wahrgenommenen Position der Bildinformation, insbesondere des zumindest einen Anzeigeelements, relativ zu dem bestimmten Teil des Fahrzeugs eine zeitverzögerte Nachführung der Position der Bildinformation zu der Position des bestimmten Teils des Fahrzeugs umfasst; und/oder abhängig von einer relativen Position zu einem anderen Teil des Fahrzeugs ist; und/oder abhängig von dem Kopfwinkel zu einem Fahrbahnverlauf ist.

Gemäß einer weiteren Ausgestaltung kann zusätzlich eine Stabilisierung oder Vibrationskompensation der Anzeige erfolgen. Dabei können Vibrationen, insbesondere in einem Frequenzbereich zwischen 1 Hz und 30 Hz, vermindert oder kompensiert werden. Alternativ kann eine derartige Vibration der Anzeige gewählt werden, dass diese, insbesondere nach Wunsch des Fahrers passend zu der Bewegung bzw. Vibration eines weiteren Teils des Fahrzeugs, eingestellt wird. Dabei kann sowohl ein Stillstand, insbesondere eine Stabilisierung der vom Fahrer wahrgenommenen Anzeige, relativ zum Kombi-Instrument als auch eine gewünschte Bewegung oder Vibration erreicht werden.

Gemäß einer weiteren zweckmäßigen Ausgestaltung ist der wahrnehmbare, räumliche Zusammenhang bei zumindest zwei Anzeigeelementen der Bildinformation zumindest zeitweise unterschiedlich. Beispielsweise kann ein Anzeigeelement, welches ein erweitertes Kombi-Instrument der Bildinformation repräsentiert, im unteren Sichtfeld des Fahrers dargestellt sein. Die Darstellung kann dergestalt erfolgen, dass das Anzeigeelement als am Lenker befindlich wahrgenommen wird. Im oberen Sichtfeld können zugleich andere Anzeigeelemente, z.B. ein rückwärtiges Kamerabild oder eine Navigationsanzeige, erzeugt werden. Diese müssen nicht am physikalischen Kombi-Instrument hängen und können für die jeweiligen Anzeigeelemente der Bildinformation entsprechend vorteilhaften räumlichen Zusammenhängen erzeugt und nachgeführt werden.

Gemäß einer weiteren zweckmäßigen Ausgestaltung wird eine wahrgenommene Entfernung der Bildinformation, insbesondere zumindest eines Anzeigeelements, von dem Fahrer abhängig von den vorgegebenen Kriterien, insbesondere im Vergleich zu zumindest einer anderen Bildinformation, insbesondere einem anderen Anzeigeelement, erzeugt oder variiert. Zweckmäßig ist die wahrgenommene Entfernung eines Anzeigeelements abhängig von einer ermittelten Wichtigkeit und/oder Zeitpriorität einer Information für den Fahrer des Fahrzeugs. So kann sich die wahrgenommene Entfernung des Anzeigeelements zum Fahrer mit einer zunehmenden Wichtigkeit und/oder Zeitpriorität der darin repräsentierten Informationen verkleinern. Zum Beispiel kann die wahrgenommene Tiefe der Anzeigeelemente, die Navigationsempfehlungen repräsentieren, abhängig von ihrer empfohlenen Ausführungsreihenfolge dargestellt werden. Alternativ kann die Wichtigkeit zwischen drei Entfernungsebenen unterschieden werden. Die Zeitpriorität kann durch eine horizontale Reihenfolge, z.B. von rechts nach links, repräsentiert werden. Im einfachsten Fall können Anzeigeelemente, die wichtiger werden, z.B. nach oben, in Richtung des zentralen Sichtfelds wandern und/oder gesucht werden. Welche Informationen dabei wichtig oder eilig sind, kann abhängig von einer automatischen Auswertung der Situation oder von der Priorität der Anzeige oder von persönlicher Einstellung des Fahrers ermittelt werden.

Gemäß einer weiteren zweckmäßigen Ausgestaltung ist vorgesehen, dass die vorgegebene, für den Fahrer wahrnehmbare, relative Position und/oder der vorgegebene, räumliche Zusammenhang abhängig ist, von einem bei der aktuellen Verkehrssituation relevanten Raumwinkel; und/oder der Fahrtrichtung, insbesondere von einer voraus ermittelten Trajektorie des Fahrzeugs; und/oder von einer Blickrichtung oder Blickbewegung des Fahrers; und/oder von einer Mimik des Fahrers, insbesondere einer Bedienung durch die mit Mitteln der Vorrichtung erkannten mimischen Veränderungen im Gesicht des Fahrers. Zweckmäßig wird die wahrgenommene relative Position zumindest eines Teils der Bildinformation abhängig von einer Relation zwischen einem relevanten Raumwinkel und einer Blickrichtung des Fahrers bestimmt. Dies bedeutet, wenn der Fahrer z.B. nach unten schaut, obwohl er sich einer Vorfahrtsstraße mit "Rechts vor Links" nähert, dann verschiebt sich ein Teil der Bildinformation nach rechts, so dass der Fahrer dazu verleitet wird, der Anzeige mit seinem Blick zu folgen. Dabei kann er auch das Fahrzeug mit Vorfahrtsrecht erkennen.

Gemäß einer weiteren zweckmäßigen Ausgestaltung wird zumindest eine Steuerungsinformation zum Variieren der Position der Bildinformation innerhalb des Anzeigebereichs der Vorrichtung mittels eines mobilen Anwendergeräts ermittelt. Bevorzugt wird die Steuerungsinformation mit Hilfe eines Sensors des mobilen Anwendergeräts und/oder einer in dem mobilen Anwendergerät gespeicherten oder von diesem abrufbaren Information und/oder einer Navigationsinformation ermittelt. Bei dem mobilen Anwendergerät kann es sich um ein Smartphone, einen Tablet-PC, ein Smart-Close, eine Smart-Watch oder um ein mit dem Fahrzeug mitführbares portables Navigationsgerät handeln.

Gemäß einer zweckmäßigen Ausgestaltung ist zumindest ein Teil des Verfahrens auf dem mobilen Anwendergerät lauffähig bzw. läuft auf diesem ab, wobei das mobile Anwendergerät zur Übermittlung der Daten zur Ausführung des Verfahrens über eine drahtgebundene oder drahtlose Schnittstelle ausgestaltet ist und mit der Vorrichtung physikalisch verbindbar ist. Dies bedeutet, dass zumindest ein Teil des Verfahrens auf dem mobilen Anwendergerät abläuft. Das mobile Anwendergerät kann an der am Kopf des Fahrers tragbaren Vorrichtung befestigbar sein. Bevorzugt kann auch das Display des mobilen Anwendergeräts zur Erzeugung der Bildinformation genutzt werden.

Es versteht sich, dass darüber hinaus weitere Mittel des mobilen Anwendergeräts zur Durchführung des Verfahrens, insbesondere zur Interaktion mit dem Fahrer, genutzt werden können. Beispielsweise können hierzu akustische Ausgabemittel, wie z.B. ein Lautsprecher, angesteuert werden. Der Austausch von Daten kann über eine in dem mobilen Anwendergerät vorhandene Sende- und/oder Empfangsvorrichtung erfolgen. Ebenso kann ein Zugriff auf in dem mobilen Anwendergerät gespeicherte Daten erfolgen. Ist ein solcher Zugriff auf Daten vorgesehen, die nicht in dem mobilen Anwendergerät gespeichert sind, so kann unter Nutzung dessen Datenübertragungsfähigkeiten ein Abruf aus einer externen Datenbank erfolgen.

Die Erfindung betrifft gemäß einem zweiten Aspekt ein Computerprogrammprodukt, das direkt in den internen Speicher eines digitalen Rechners geladen werden kann und Softwarecodeabschnitte umfasst, mit denen die Schritte gemäß dem oben beschriebenen Verfahren ausgeführt werden, wenn das Produkt auf einem Rechner läuft. Das Computerprogrammprodukt kann auf einem Speichermedium, wie z.B. einem USB-Speicherstick, einer DVD, einer CD-ROM, einer Festplatte oder dergleichen, gespeichert sein. Ebenso kann das Computerprogrammprodukt über eine Kommunikationsverbindung (drahtlos oder drahtgebunden) übertragbar sein. Der Rechner, auf dem das Computerprogrammprodukt abläuft, kann eine Recheneinheit der tragbaren Vorrichtung und/oder eine Recheneinheit des mobilen Anwendergeräts sein.

Gemäß einem dritten Aspekt umfasst die Erfindung ein System zur Darstellung einer Bildinformation für einen Fahrer eines Zweirads. Das System umfasst eine am Kopf des Fahrers tragbare Vorrichtung zur Darstellung der Bildinformation sowie eine Recheneinheit, die dazu ausgebildet ist, eine Position der dargestellten Bildinformation innerhalb eines Anzeigebereichs der Vorrichtung abhängig von der relativen Position des Kopfes des Zweiradfahrers zu einem bestimmten Teil des Fahrzeugs hinsichtlich der wahrgenommenen Tiefe derart zu variieren, dass die von dem Fahrer wahrgenommene Position der dargestellten Bildinformation, insbesondere zumindest eines Anzeigeelements, innerhalb des Anzeigebereichs relativ zu dem bestimmten Teil des Fahrzeugs einen vorgegebenen, von dem Fahrer wahrnehmbaren, räumlichen Zusammenhang bildet und im Wesentlichen konstant bleibt.

Das erfindungsgemäße System weist die gleichen Vorteile auf, wie diese oben in Verbindung mit dem erfindungsgemäßen Verfahren beschrieben wurden.

Das System kann weitere Mittel zur Durchführung des Verfahrens der oben beschriebenen Art umfassen.

Besonders vorteilhaft ist die Anwendung der Erfindung auf Zweiradtypen, die ihren Neigungswinkel und die Stellung des Lenkers während der Fahrt wesentlich verändern. Somit ergibt sich eine Vielzahl der vorstehend explizit beschriebenen und weiterer für einen Fachmann unschwer nachvollziehbarer Vorteile. Ferner kann die Erfindung auch sinngemäß auf ein Kraftfahrzeug angewandt werden.

Die Erfindung wird nachfolgend näher anhand eines Ausführungsbeispiels in der Zeichnung erläutert.

Es zeigen:
- Fig. 1: eine schematische Darstellung eines Zweiradfahrers auf einem Zweirad, wobei ein von dem Fahrer des Zweirads getragener Helm eine erfindungsgemäße Vorrichtung zur Durchführung des erfindungsgemäßen Verfahrens und das Zweirad eine physikalische Anzeigevorrichtung umfasst;
- Fig. 2: eine vergrößerte Darstellung eines Ausschnitts des Fahrers und des Lenkers des Zweirads; und
- Fig. 3: eine schematische Darstellung einer erfindungsgemäßen Darstellung einer Bildinformation für den Fahrer des Zweirads mittels einer am Kopf des Fahrers tragbaren Vorrichtung.

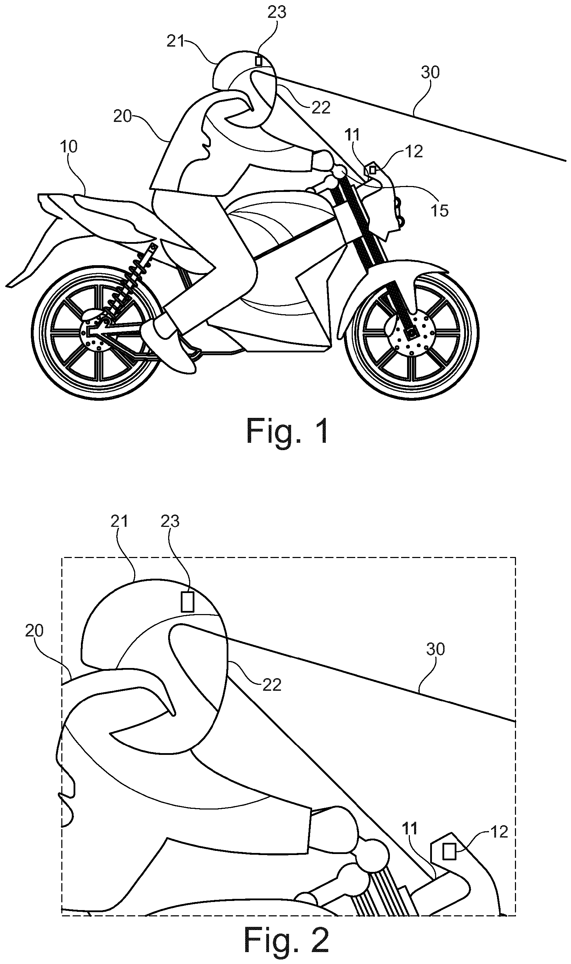

Fig. 1 zeigt eine schematische Darstellung eines Zweiradfahrers 20 auf einem Zweirad in Gestalt eines Motorrads 10. Der Zweiradfahrer bzw. Motorradfahrer 20 trägt einen Helm 21, durch dessen Visier 22 er in seiner Blickrichtung 30 das Umfeld des Motorrads 10 erfassen kann. Die Blickrichtung 30 sowie das Sichtfeld des Motorradfahrers 20 sind im Wesentlichen durch die Kopfhaltung des Motorradfahrers 20 bedingt. Blickt der Motorradfahrer 20 nach vorne, d.h. in Fahrtrichtung des Motorrads 10, so kann er mit Hilfe einer im Bereich des Lenkers angeordneten Instrumentenanzeige 11 verschiedene Anzeigeelemente, z.B. Tachometer, Drehzahlmesser und dergleichen, wahrnehmen.

Fig. 2 zeigt eine vergrößerte Darstellung eines Ausschnitts des Motorradfahrers 20, der den Helm 21 trägt, sowie des Lenkers 15 des Motorrads 10. Dabei ist insbesondere besser erkennbar, dass bei der mit dem Bezugszeichen 30 gekennzeichneten Blickrichtung der Motorradfahrer 20 sowohl einen Teil der Umgebung vor dem Motorrad 10 als auch die Instrumentenanzeige 11 visuell erfasst. Die Instrumentenanzeige 11 umfasst in der Regel nur die wichtigsten für die Bewegung des Motorrads 10 notwendigen Informationen. Um dem Motorradfahrer weitere Informationen zugänglich zu machen, ist der Helm 21 mit einer Vorrichtung zur Darstellung einer Bildinformation 24 für den Fahrer 20 ausgestattet. Die in den Figuren nicht näher dargestellte Vorrichtung kann beispielsweise in Gestalt eines Head-up-Displays in den Helm 21 realisiert sein.

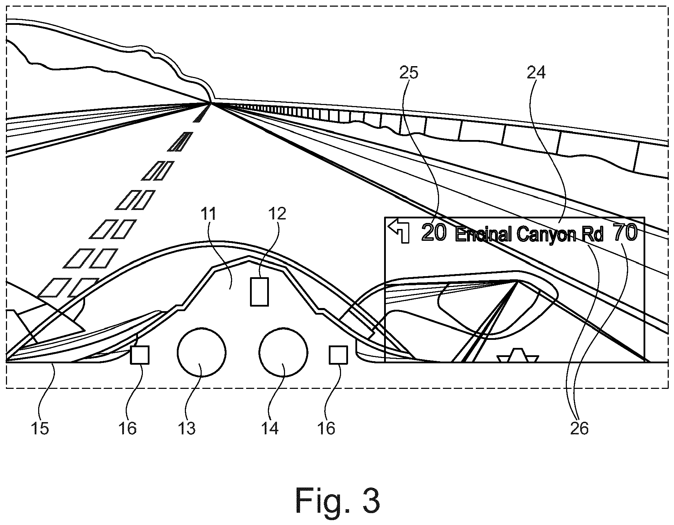

Die Position der dargestellten Bildinformation innerhalb eines Anzeigebereichs der Vorrichtung des Helms 21 variiert abhängig von der relativen Position des Kopfes des Motorradfahrers zu der Instrumentenanzeige. Die Variation wird derart vorgenommen, dass die von dem Motorradfahrer wahrgenommene Position der dargestellten Bildinformation 24 innerhalb des Anzeigebereichs 25 relativ zu der Instrumentenanzeige des Motorrads 10 einen vorgegebenen, von dem Motorradfahrer wahrnehmbaren, räumlichen Zusammenhang bildet und im Wesentlichen konstant bleibt (Fig. 3).

Dies bedeutet, dass durch die Vorrichtung des Helms 21 die Bildinformation 24, die ein oder mehrere virtuelle Anzeigeinstrumente oder -elemente umfasst, derart erzeugt wird, dass diese einen festen räumlichen Zusammenhang mit der physikalischen Instrumentenanzeige 11 des Motorrads 10 bildet. Die physikalische Instrumentenanzeige, die wie beschrieben, in der Regel nur wenige vorgeschriebene Anzeigen umfasst, kann mit Hilfe der Vorrichtung durch mehrere weitere Anzeigeelemente als virtuelle Fortsetzung betrachtet werden.

Dabei kann der Motorradfahrer 20 innerhalb gewünschter Freiheitsgrade seinen Kopf bewegen, wobei die wahrgenommene Position virtueller Anzeigen relativ zu der Instrumentenanzeige 11 weitgehend unbeweglich bleibt. Dies bedeutet, das oder die Anzeigeelemente 26 der Bildinformation 24, die durch die Vorrichtung des Helms 21 erzeugt wird bzw. werden, haften in der Wahrnehmung des Fahrers 20 an der physikalischen Instrumentenanzeige 11.

Ein Vorteil besteht darin, dass für den Motorradfahrer 20 keine Überlagerung sowie keine gegenseitige Bewegung der Anzeigeelemente der Instrumentenanzeige 11 und des oder der Anzeigeelemente 26 der Bildinformation 24, die durch die Vorrichtung des Helms 21 erzeugt ist, zueinander stattfindet.

Um die weitgehende Unbeweglichkeit zwischen der Instrumentenanzeige 11 des Motorrads 10 und dem oder den Anzeigeelementen 26 der Bildinformation 24 realisieren zu können, erfolgt eine Ermittlung der relativen Position und des Kopfes des Fahrers 20 zu der Instrumentenanzeige 11 des Motorrads 10 zu mehreren Zeitpunkten. Ferner werden Steuerungsinformationen zum Variieren der Position des oder der Anzeigeelemente 26 der Bildinformation 24 innerhalb des Anzeigebereichs 25 der tragbaren Vorrichtung ermittelt. Die Steuerungsinformationen werden dabei abhängig von den mehreren ermittelten Positionen des Kopfes des Motorradfahrers 20 zu der Instrumentenanzeige 11 des Motorrads 10 ermittelt. Anschließend erfolgt ein Variieren der Position des oder der Anzeigeelemente 26 der Bildinformation 24 innerhalb des Anzeigebereichs 25 der Vorrichtung, abhängig von den ermittelten Steuerungsinformationen derart, dass sich der vorgegebene, durch den Fahrer wahrnehmbare, räumliche Zusammenhang zu der Instrumentenanzeige 11 des Motorrads 10 bildet.

Dies ist exemplarisch und schematisch in Fig. 3 dargestellt, welche die Bildinformation 24 für den Fahrer des Motorrads 10 mittels des oben beschriebenen Helms 21 zeigt. Dabei ist das wahrnehmbare Sichtfeld bzw. der Sichtbereich 30 des Motorradfahrers 20 erkennbar. Neben der durch den Motorradfahrer 20 wahrnehmbaren Umgebung ist die Instrumentenanzeige 11, welche am Lenker 15 des Motorrads 10 befestigt ist und beispielhaft zwei Anzeigeinstrumente 13, 14 umfasst, erkennbar. Darüber hinaus ist lediglich beispielhaft rechts des Anzeigeinstruments 14 die Bildinformation 24 dargestellt, die den Anzeigebereich 25 mit hier in etwa rechteckiger Gestalt umfasst. Innerhalb des Anzeigebereichs 25 sind lediglich beispielhaft mehrere Anzeigeelemente 26, hier: Navigationsinformationen, dargestellt. Bei einer Kopfbewegung des Motorradfahrers 20 nach rechts wandern die Anzeigeinstrumente 13, 14 in den linken Bereich seines Sichtbereichs 30. Gleichzeitig erfolgt eine Anpassung der Position der dargestellten Bildinformation 24, welche in entsprechender Weise nach links verschoben wird, so dass der beispielhaft in Fig. 3 dargestellte räumlich, wahrnehmbare Zusammenhang erhalten bleibt. Dieses Vorgehen erfolgt in analoger Weise auch für Kopfbewegungen in andere Richtungen, z.B. nach links und/oder oben und/oder unten.

Um die relative Position des Kopfes des Motorradfahrers 20 zu der Instrumentenanzeige 11 des Motorrads 10 erfassen zu können, kann der Helm 21 über eine Kamera 23 verfügen (siehe Figuren 1 und 2), welche einen oder mehrere Aufkleber 16, die an bestimmten Stellen des Lenkers 15 angebracht sind, erfassen (Fig. 3). Die Markierungen der beispielhaft zwei Aufkleber werden mit Hilfe der Kamera 23 erkannt und eingelernt. Die Aufkleber 16 können beispielsweise einen QR-Code umfassen, welcher relevante Parameter für das vorgeschlagene Verfahren trägt. Die relative Position des Kopfes des Motorradfahrers 20 zu der Instrumentenanzeige 11 des Motorrads 10 wird laufend mit Hilfe der Kamera 23 in dem Helm 21 ermittelt. Die Ermittlung orientiert sich dabei an den Markierungen, d.h. den Aufklebern 16.

Alternativ oder zusätzlich kann auch im Bereich des Lenkers 15 eine Kamera 12 vorgesehen sein, die in entsprechender Weise die Position des Kopfes des Fahrers 20 erfasst. Analog zu den oben beschriebenen Aufklebern können hierbei Markierungen an dem Helm 21 zur Erfassung der Kopfposition genutzt werden. Ebenso kann eine Umrissdetektion und dergleichen erfolgen.

Die vom Fahrer 20 wahrgenommene, relative Position der Bildinformation 24 zum Kombi-Instrument bzw. Instrumententräger 11 des Fahrzeugs kann derart stabilisiert werden, dass die Position des betreffenden Anzeigeelements in der Bildinformation auch bei komplexen Kopfbewegungen in verschiedenen Richtungen von dem Fahrer 20 stets als nahezu unbeweglich zu der Instrumentenanzeige 11 wahrgenommen wird. Dadurch wird die Instrumentenanzeige 11 nach Bedarf räumlich und von seiner Anzeigefläche her erweitert.

Die vom Fahrer 20 des Motorrads 10 wahrgenommene Position der Anzeigeelemente 26 der Bildinformation 24 wird entsprechend weiteren, gewünschten vom Fahrer ausgewählten Kriterien, bevorzugt relativ zu einem Koordinatensystem des Lenkers 15 bzw. dem Kombi-Instrument bzw. dem Instrumententräger variiert.

Im Rahmen dieses Verfahrens kann auch ein Objekt-Tracking bzw. eine Bewegungsprädiktion angewandt werden. Dabei eilen die ermittelten Steuerungsparameter zur Erzeugung des oder der Anzeigeelemente der Bildinformation 24 der tatsächlichen Bewegung um eine kurze Zeitspanne voraus. Hierdurch kann eine prädiktive Anpassung der Position der Bildinformation 24 bzw. derer Anzeigeelemente 26 erfolgen. Insbesondere kann sich die nahe Zukunft dabei auf einen Zeithorizont von 0,1 s bis 5 s beziehen. Dadurch kann eine Systemträgheit überwunden werden, wodurch auch schnelle kleine Bewegungen, z.B. Vibrationen, unterdrückt werden können. Falls gewünscht, können solche kleine Bewegungen auch verstärkt oder verändert werden.

Die Steuerungsinformation oder -informationen zum Variieren der Position 24 innerhalb des Anzeigebereichs 25 können mittels eines nicht näher dargestellten mobilen Anwendergeräts ermittelt werden. Ein mobiles Anwendergerät kann dabei beispielsweise ein Smartphone, ein Tablet-PC, ein Smart-Close und dergleichen sein. Bevorzugt wird die Steuerungsinformation mit Hilfe eines Sensors des mobilen Anwendergeräts ermittelt. Ebenso kann eine in dem mobilen Anwendergerät gespeicherte oder von diesem abrufbare Information verarbeitet werden. Ebenso können als Steuerungsinformation von dem mobilen Anwendergerät bereitgestellte Navigationsinformationen verarbeitet werden. Das mobile Anwendergerät kann ferner dazu genutzt werden, dass zumindest ein Teil des Verfahrens auf diesem abläuft. Hierzu ist es erforderlich, dass eine Datenschnittstelle zwischen dem mobilen Anwendergerät und der die Bildinformation 24 erzeugenden Vorrichtung des Helms 21 und/oder der Instrumentenanzeige 11 des Motorrads 10 gegeben ist. Die Schnittstelle ist bevorzugt drahtlos. Sie kann jedoch auch durch physikalische Verbindung realisiert sein.

Das mobile Anwendergerät kann ferner auch dazu genutzt werden, die darzustellende Bildinformation auf dem Display des mobilen Anwendergeräts darzustellen.

Auch weitere Mittel des mobilen Anwendergeräts können zur Durchführung des Verfahrens, insbesondere zur Interaktion mit dem Motorradfahrer 20, genutzt werden. Beispielsweise kann der Lautsprecher des mobilen Anwendergeräts für akustische Ansagen oder Töne angesteuert werden. Ist ein Datenzugriff auf Daten erforderlich, die weder in dem mobilen Anwendergerät noch in der Vorrichtung oder dem Motorrad 10 gespeichert sind, so kann die Datenübertragungsschnittstelle des mobilen Anwendergeräts genutzt werden, die entsprechende Information abzurufen.

Im Ergebnis wird dadurch eine ergonomische Anzeige unterschiedlichster Informationen durch die Kombination einer physikalischen Instrumentenanzeige mit virtuell erzeugten Anzeigeelementen bereitgestellt. Das durch die Bildinformation 24 bereitgestellte virtuelle "Kombi-Instrument" kann auch während des Lebenszyklus des Motorrads 10 und des Helms 21 durch Softwareaktualisierungen verändert, verbessert oder vom Kunden wunschgemäß konfiguriert werden.

Das Aussehen und Gestaltungsmerkmale der Bildinformation, insbesondere deren Anzeigeelemente, können mittels sog. "Skins", die Designvarianten der Anzeige repräsentieren, ausgestaltet sein.

Die physikalische Instrumentenanzeige kann durch das vorgeschlagene Verfahren auf wesentliche Elemente begrenzt werden, wodurch sich eine Aerodynamik des Motorrads 10 verbessern lässt. Gleichzeitig ist damit eine Gewichtsreduktion verbunden.

Aufgrund der vom Fahrer wahrnehmbaren, feststehenden räumlichen Position der Bildinformation relativ zu der physikalischen Instrumentenanzeige 11 kann eine Augenermüdung vermieden oder zumindest reduziert werden. Insbesondere lässt sich darüber hinaus das untere Blickfeld des Fahrers sinnvoll nutzen.

In der vorliegenden Beschreibung wurde das Verfahren in Verbindung mit einem Motorrad 10 und einem Helm 21 des Motorradfahrers 20 beschrieben. Anstelle eines Motorrads könnte jedes beliebige Zweiradfahrzeug, insbesondere ein Fahrrad, Pedelec, E-Bike und dergleichen ebenso im Rahmen der Erfindung genutzt werden. Sinngemäß ist die Erfindung auch für ein Kraftfahrzeug anwendbar.

Der im Ausführungsbeispiel beschriebene Helm kann allgemein eine am Kopf des Fahrers tragbare Vorrichtung sein. Es kann sich um eine Zusatzvorrichtung handeln, die mit dem Motorradhelm oder einem Fahrradhelm verbindbar ist, ebenso in den Motorradhelm bzw. Fahrradhelm integriert ist. Alternativ kann es sich auch um eine von dem Fahrer tragbare Daten- und Anzeigebrille handeln, die insbesondere zum Austausch mit dem Fahrzeug eingerichtet ist.

### Bezugszeichenliste

- 10: Zweirad
- 11: Instrumentenanzeige
- 12: Kamera
- 13: Anzeigeinstrument
- 14: Anzeigeinstrument
- 15: Lenker
- 16: Aufkleber
- 20: Fahrer
- 21: Helm
- 22: Visier
- 23: Kamera
- 24: Bildinformation
- 25: Anzeigebereich
- 26: Anzeigeelement
- 30: Blickrichtung

## Patentansprüche

1. Verfahren zur Darstellung einer Bildinformation (24) für einen Zweiradfahrer (20) eines als Zweirad ausgebildeten Fahrzeugs (10) mittels einer am Kopf des Zweiradfahrers (20) tragbaren Vorrichtung, bei dem
eine Position der dargestellten Bildinformation (24) innerhalb eines Anzeigebereichs (25) der Vorrichtung abhängig von der relativen Position des Kopfes des Zweiradfahrers zu einem bestimmten Teil des Fahrzeugs (10) hinsichtlich der wahrgenommenen Tiefe derart variiert wird, dass die von dem Zweiradfahrer (20) wahrgenommene Position der dargestellten Bildinformation (24), insbesondere zumindest eines Anzeigeelements (26), innerhalb des Anzeigebereichs (25) relativ zu dem bestimmten Teil des Fahrzeugs (10) einen vorgegebenen, von dem Zweiradfahrer (20) wahrnehmbaren, räumlichen Zusammenhang bildet und im Wesentlichen konstant bleibt.

2. Verfahren nach Anspruch 1, bei dem zumindest ein Parameter der relativen Position des Kopfes des Zweiradfahrers (20) zu dem bestimmten Teil des Fahrzeugs (10) mittels eines ersten Sensors, der zu dem bestimmten Teil hin gerichtet ist, ermittelt wird, wobei mit dem ersten Sensor das bestimmte Teil des Fahrzeugs (10) erkannt wird.

3. Verfahren nach Anspruch 1 oder 2, bei dem zumindest ein Parameter der relativen Position des Kopfes des Zweiradfahrers (20) zu dem bestimmten Teil des Fahrzeugs (10) mittels eines zweiten Sensors, der zu dem Kopf des Zweiradfahrers (20) hin gerichtet und mit dem Fahrzeug (10) verbunden ist, ermittelt wird, wobei mit dem zweiten Sensor zumindest ein Teil der Vorrichtung und/oder des Kopfes des Zweiradfahrers (20) erkannt wird.

4. Verfahren nach Anspruch 2 oder 3, bei dem der zumindest eine Parameter für den wahrnehmbaren, räumlichen Zusammenhang abhängig von einer Bedienhandlung des Zweiradfahrers (20) festgelegt, insbesondere eingelernt wird.

5. Verfahren nach einem der Ansprüche 2 bis 4, bei dem durch den ersten und/oder den zweiten Sensor eine bestimmte Markierung zumindest eines Teils des Fahrzeugs (10) und/oder der Vorrichtung erfasst wird, wobei das Variieren der Position der Bildinformation (24) innerhalb des Anzeigebereichs (25) der Vorrichtung abhängig von der erkannten relativen Position der Markierung erfolgt.

6. Verfahren nach einem der vorhergehenden Ansprüche, bei dem die relative Position des Kopfes des Zweiradfahrers (20) zu dem bestimmten Teil des Fahrzeugs (10), insbesondere der zumindest eine Parameter der relativen Position, durch einen oder mehrere der folgenden Erfassungsmittel ermittelt wird:
- einen Neigungssensor;
- einen globalen Positionssensor bzw. -geber;
- ein Mobilfunk-basiertes Positionierungssystem.

7. Verfahren nach einem der vorhergehenden Ansprüche, bei dem bei einer Überschreitung eines oder mehrerer, vorgegebener Parameter für eine Kopfposition, insbesondere von Bewegungsparametern der Position des Kopfes des Zweiradfahrers (20) und/oder des Zweiradfahrerblicks, in Bezug zu dem bestimmten Teil des Fahrzeugs (10), eine Veränderung der Anzeigeposition und/oder Form und/oder Inhalts zumindest eines Teils der Bildinformation (24) erfolgt.

8. Verfahren nach einem der vorhergehenden Ansprüche, bei dem zumindest eine Bewegungs-Information zu einer relativen Kopfposition oder relativen Kopfbewegung des Zweiradfahrers (20) zu dem bestimmten Teil des Fahrzeugs (10) für die nahe Zukunft ermittelt und verarbeitet wird.

9. Verfahren nach einem der vorhergehenden Ansprüche, bei dem der wahrnehmbare, räumliche Zusammenhang der wahrgenommenen Position der Bildinformation (24), insbesondere des zumindest einen Anzeigeelements (26), relativ zu dem bestimmten Teil des Fahrzeugs (10)
- eine zeitverzögerte Nachführung der Position der Bildinformation (24) zu der Position des bestimmten Teils des Fahrzeugs (10) umfasst; und/oder
- abhängig von einer relativen Position zu einem anderen Teils des Fahrzeugs (10) ist; und/oder
- abhängig von dem Kopfwinkel zu einem Fahrbahnverlauf ist.

10. Verfahren nach einem der vorhergehenden Ansprüche, bei dem der wahrnehmbare, räumliche Zusammenhang bei zumindest zwei Anzeigeelementen der Bildinformation (24) zumindest zeitweise unterschiedlich ist.

11. Verfahren nach einem der vorhergehenden Ansprüche, bei dem eine wahrgenommene Entfernung der Bildinformation (24), insbesondere zumindest eines Anzeigeelements (26), von dem Zweiradfahrer (20) abhängig von vorgegebenen Kriterien, insbesondere im Vergleich zu zumindest einer anderen Bildinformation (24), insbesondere einem anderen Anzeigeelement (26), erzeugt oder variiert wird.

12. Verfahren nach einem der vorhergehenden Ansprüche, bei dem die vorgegebene, vom Zweiradfahrer (20) wahrnehmbare, relative Position und/oder der vorgegebene, räumliche Zusammenhang abhängig ist, von:
- einem bei der aktuellen Verkehrssituation relevanten Raumwinkel; und/oder
- der Fahrtrichtung, insbesondere von einer vorausermittelten Trajektorie des Fahrzeugs (10); und/oder
- von der Blickrichtung oder Blickbewegung des Zweiradfahrers (20), und/oder
- von einer Mimik des Zweiradfahrers (20), insbesondere einer Bedienung durch die mit Mitteln der Vorrichtung erkannten mimischen Veränderungen im Gesicht des Zweiradfahrers (20).

13. Verfahren nach einem der vorhergehenden Ansprüche, bei dem zumindest eine Steuerungsinformation zum Variieren der Position der Bildinformation (24) innerhalb des Anzeigebereichs (25) der Vorrichtung mittels eines mobilen Anwendergeräts ermittelt wird.

14. Verfahren nach Anspruch 13, bei dem zumindest ein Teil des Verfahrens auf dem mobilen Anwendergerät läuft oder lauffähig ist, das zur Übermittlung der Daten zur Ausführung des Verfahrens über eine drahtgebundene oder drahtlose Schnittstelle verfügt und insbesondere mit der Vorrichtung physikalisch verbindbar ist.

15. Computerprogrammprodukt, das direkt in den internen Speicher eines digitalen Rechners geladen werden kann und Softwarecodeabschnitte umfasst, mit denen die Schritte gemäß einem der vorhergehenden Ansprüche ausgeführt werden, wenn das Produkt auf einem Rechner läuft.

16. System zur Darstellung einer Bildinformation (24) für einen Zweiradfahrer (20) eines als Zweirad ausgebildeten Fahrzeugs (10), umfassend:
- eine am Kopf des Zweiradfahrers (20) tragbare Vorrichtung zur Darstellung der Bildinformation (24);
- eine Recheneinheit, die dazu ausgebildet ist, eine Position der dargestellten Bildinformation (24) innerhalb eines Anzeigebereichs (25) der Vorrichtung abhängig von der relativen Position des Kopfes des Zweiradfahrers zu einem bestimmten Teil des Fahrzeugs (10) hinsichtlich der wahrgenommenen Tiefe derart zu variieren, dass die von dem Zweiradfahrer (20) wahrgenommene Position der dargestellten Bildinformation (24), insbesondere zumindest eines Anzeigeelements (26), innerhalb des Anzeigebereichs (25) relativ zu dem bestimmten Teil des Fahrzeugs (10) einen vorgegebenen, von dem Zweiradfahrer (20) wahrnehmbaren, räumlichen Zusammenhang bildet und im Wesentlichen konstant bleibt.

17. System nach Anspruch 16, **dadurch gekennzeichnet, dass** dieses weitere Mittel zur Durchführung des Verfahrens nach einem der Ansprüche 2 bis 14 umfasst.

## Claims

1. Method for presenting image information (24) for a cyclist (20) riding a vehicle (10) which is embodied as a bicycle, by means of a device which can be worn on the cyclist's (20) head, in which a position of the presented image information (24) is varied in terms of the perceived depth within a display area (25) of the device depending on the relative position of the cyclist's head with respect to a specific part of the vehicle (10), in such a way that the position, perceived by the cyclist (20), of the presented image information (24), in particular of at least one display element (26) within the display area (25) forms, relative to the specific part of the vehicle (10), a predefinable spatial relationship which can be perceived by the cyclist (20), and remains essentially constant.

2. Method according to Claim 1, in which at least one parameter of the relative position of the cyclist's (20) head with respect to the specific part of the vehicle (10) is determined by means of a first sensor which is directed toward the specific part, wherein the specific part of the vehicle (10) is detected with the first sensor.

3. Method according to Claim 1 or 2, in which at least one parameter of the relative position of the cyclist's (20) head with respect to the specific part of the vehicle (10) is determined by means of a second sensor which is directed towards the cyclist's (20) head and is connected to the vehicle (10), wherein at least part of the device and/or of the cyclist's (20) head is recognized with the second sensor.

4. Method according to Claim 2 or 3, in which the at least one parameter for the spatial relationship which can be perceived is defined depending on an operator control action of the cyclist (20), in particular is learnt.

5. Method according to one of Claims 2 to 4, in which the first and/or the second sensor senses a specific mark on at least one part of the vehicle (10) and/or of the device, wherein the varying of the position of the image information (24) within the display area (25) of the device occurs depending on the detected relative position of the mark.

6. Method according to one of the preceding claims, in which the relative position of the cyclist's (20) head with respect to the specific part of the vehicle (10), in particular the at least one parameter of the relative position, is determined by one or more of the following sensing means:
- an inclination sensor;
- a global position sensor or encoder;
- a mobile-radio-based positioning system.

7. Method according to one of the preceding claims, in which when one or more specified parameters for a head position are exceeded, in particular, by movement parameters of the position of the cyclist's (20) head and/or of the cyclist's viewing direction, with respect to the specific part of the vehicle (10), a change in the display position and/or shape and/or content of at least some of the image information (24) takes place.

8. Method according to one of the preceding claims, in which at least one movement information item relating to a relative position of the cyclist's (20) head or relative movement of the cyclist's (20) head with respect to the specific part of the vehicle (10) is determined for the near future and processed.

9. Method according to one of the preceding claims, in which the spatial relationship which can be perceived between the perceived position of the image information (24), in particular of the at least one display element (26), relative to the specific part of the vehicle (10) comprises
- delayed tracking of the position of the image information (24) with respect to the position of the specific part of the vehicle (10); and/or
- is dependent on a relative position with respect to another part of the vehicle (10); and/or
- is dependent on the head angle with respect to a profile of the roadway.

10. Method according to one of the preceding claims, in which the spatial relationship which can be perceived when there are at least two display elements of the image information (24) is at least temporarily different.

11. Method according to one of the preceding claims, in which a perceived distance of the image information (24), in particular of at least one display element (26), from the cyclist (20) is generated or varied depending on predefined criteria, in particular in comparison with at least one other image information item (24), in particular another display element (26).

12. Method according to one of the preceding claims, in which the specified relative position, which can be perceived by the cyclist (20), and/or the specified spatial relationship is dependent on:
- a spatial angle which is relevant for the current traffic situation; and/or
- the direction of travel, in particular on a trajectory which has been determined in advance for the vehicle (10); and/or
- on the viewing direction or viewing movement of the cyclist (20), and/or
- on a facial expression of the cyclist (20), in particular an operator control action by means of the changes in the facial gestures of the cyclist (20) which are detected with a means of the device.

13. Method according to one of the preceding claims, in which at least one control information item for varying the position of the image information (24) within the display area (25) of the device is determined by means of a mobile user apparatus.

14. Method according to Claim 13, in which at least part of the method runs or can run on the mobile user apparatus which has a wire bound or wireless interface for the transmission of the data for executing the method, and, in particular, is physically connected to the device.

15. Computer program product which can be loaded directly into the internal memory of a digital computer and comprises software code sections with which the steps can be executed according to one of the preceding claims when the product runs on a computer.

16. System for presenting image information (24) for a cyclist (20) riding a vehicle (10) which is embodied as a bicycle, comprising:
- a device which can be worn on the cyclist's (20) head and has the purpose of displaying the image information (24);
- a computer unit which is designed to vary in respect of the perceived depth a position of the presented image information (24) within a display area (25) of the device depending on the relative position of the cyclist's head with respect to a specific part of the vehicle (10) in such a way that the position, perceived by the cyclist (20), of the presented image information (24), in particular of at least one display element (26), within the display area (25) relative to the specific part of the vehicle (10) forms a specified spatial relationship which can be perceived by the cyclist (20), and remains essentially constant.

17. System according to Claim 16, **characterized in that** said system comprises further means for carrying out the method according to one of Claims 2 to 14.

## Revendications

1. Procédé de présentation d'une information d'image (24), destinée à un conducteur de deux-roues (20) d'un véhicule (10) conçu comme un deux-roues, au moyen d'un dispositif qui peut être porté sur la tête du conducteur de deux-roues (20), procédé dans lequel la position de l'information d'image présentée (24) dans une zone d'affichage (25) du dispositif varie en fonction de la position relative de la tête du conducteur de deux-roues par rapport à une partie déterminée du véhicule (10) en termes de profondeur perçue de telle sorte que la position de l'information d'image présentée (24), perçue par le conducteur de deux-roues (20), en particulier au moins un élément d'affichage (26), à l'intérieur de la zone d'affichage (25) par rapport à la partie déterminée du véhicule (10), forme un contexte spatial prédéterminé, qui peut être perçu par le conducteur deux-roues (20), et reste sensiblement constant.

2. Procédé selon la revendication 1, dans lequel au moins un paramètre de la position relative de la tête du conducteur de deux-roues (20) par rapport à la partie déterminée du véhicule (10) est obtenu au moyen d'un premier capteur qui est dirigé vers la partie déterminée, la partie déterminée du véhicule (10) étant détectée avec le premier capteur.

3. Procédé selon la revendication 1 ou 2, dans lequel au moins un paramètre de la position relative de la tête du conducteur de deux-roues (20) par rapport à la partie déterminée du véhicule (10) est obtenu au moyen d'un deuxième capteur qui est dirigé vers la tête du conducteur de deux-roues (20) et qui est relié au véhicule (10), au moins une partie du dispositif et/ou la tête du conducteur de deux-roues (20) étant détectée avec le deuxième capteur.

4. Procédé selon la revendication 2 ou 3, dans lequel l'au moins un paramètre du contexte spatial perceptible est déterminé, notamment acquis par apprentissage, en fonction d'une manipulation du conducteur de deux-roues (20) .

5. Procédé selon l'une des revendications 2 à 4, dans lequel un marquage déterminé d'au moins une partie du véhicule (10) et/ou du dispositif est détecté par le premier et/ou le deuxième capteur, la variation de la position de l'information d'image (24) dans la zone d'affichage (25) du dispositif étant effectuée en fonction de la position relative détectée du marquage.

6. Procédé selon l'une des revendications précédentes, dans lequel la position relative de la tête du conducteur de deux-roues (20) par rapport à la partie déterminée du véhicule (10), en particulier l'au moins un paramètre de la position relative, est obtenue par un ou plusieurs des moyens de détection suivants :
- un capteur d'inclinaison ;
- un capteur ou transmetteur de position globale ;
- un système de positionnement par téléphonie mobile.

7. Procédé selon l'une des revendications précédentes, dans lequel, en cas de dépassement d'un ou plusieurs paramètres prédéterminés relatifs à une position de tête, notamment des paramètres de déplacement de la position de la tête du conducteur de deux-roues (20) et/ou de la vision du conducteur de deux-roues, par rapport à la partie déterminée du véhicule (10), une modification de la position d'affichage et/ou de la forme et/ou du contenu d'au moins une partie de l'information d'image (24) est effectuée.

8. Procédé selon l'une des revendications précédentes, dans lequel au moins une information de mouvement concernant la position relative de la tête ou un mouvement relatif de la tête du conducteur de deux-roues (20) par rapport à la partie déterminée du véhicule (10) est obtenue et traitée pour un avenir proche.

9. Procédé selon l'une des revendications précédentes, dans lequel le contexte spatial perceptible de la position perçue de l'information d'image (24), en particulier de l'au moins un élément d'affichage (26), par rapport à la partie déterminée du véhicule (10)
- comprend un suivi retardé de la position de l'information d'image (24) par rapport à la position de la partie déterminée du véhicule (10) ; et/ou
- dépend d'une position relative par rapport à une autre partie du véhicule (10) ; et/ou
- dépend de l'angle de la tête par rapport à un tracé de la voie de circulation.

10. Procédé selon l'une des revendications précédentes, dans lequel le contexte spatial perceptible est au moins temporairement différent pour au moins deux éléments d'affichage de l'information d'image (24).

11. Procédé selon l'une des revendications précédentes, dans lequel la distance perçue de l'information d'image (24), en particulier d'au moins un élément d'affichage (26), est générée ou modifiée par le conducteur de deux-roues (20) en fonction de critères prédéterminés, notamment par rapport à au moins une autre information d'image (24), en particulier un autre élément d'affichage (26).

12. Procédé selon l'une des revendications précédentes, dans lequel la position relative prédéterminée, qui peut être perçue par le conducteur de deux-roues (20), et/ou le contexte spatial prédéterminé dépendent :
- d'un angle solide adapté à la situation actuelle du trafic ; et/ou
- du sens de marche, notamment d'une trajectoire préalablement déterminée du véhicule (10) ; et/ou
- de la direction de vision ou du mouvement de vision du conducteur de deux-roues (20), et/ou
- d'une expression faciale du conducteur de deux-roues (20), notamment d'une opération par les changements faciaux du visage du conducteur de deux-roues (20) qui sont reconnus avec des moyens du dispositif.

13. Procédé selon l'une des revendications précédentes, dans lequel au moins une information de commande destinée à faire varier la position de l'information d'image (24) à l'intérieur de la zone d'affichage (25) du dispositif est déterminée au moyen d'un dispositif d'utilisateur mobile.

14. Procédé selon la revendication 13, dans lequel au moins une partie du procédé est mise en œuvre ou peut être mise en œuvre sur l'appareil utilisateur mobile qui dispose d'une interface filaire ou sans fil destinée à transmettre les données de mise en œuvre du procédé et, en particulier, qui peut être relié physiquement au dispositif.

15. Progiciel qui peut être chargé directement dans la mémoire interne d'un ordinateur numérique et qui comprend des portions de code logiciel avec lesquelles les étapes selon l'une des revendications précédentes sont exécutées lorsque le progiciel est exécuté sur un ordinateur.

16. Système de présentation d'information d'image (24) destinée à un conducteur de deux-roues (20) d'un véhicule (10) conçu comme un deux-roues, ledit système comprenant :
- un dispositif de présentation de l'information d'image (24) qui peut être porté sur la tête du conducteur de deux-roues (20) ;
- une unité de calcul qui est conçue pour faire varier la position de l'information d'image présentée (24) à l'intérieur d'une zone d'affichage (25) du dispositif en fonction de la position relative de la tête du conducteur de deux-roues par rapport à une partie déterminée du véhicule (10) en termes de profondeur perçue de sorte que la position, perçue par le conducteur de deux-roues (20), de l'information d'image présentée (24), en particulier d'au moins un élément d'affichage (26), à l'intérieur de la zone d'affichage (25) par rapport à la partie déterminée du véhicule (10) forme un contexte spatial prédéterminé perceptible par le conducteur de deux-roues (20) et reste sensiblement constant.

17. Système selon la revendication 16, **caractérisé en ce que** celui-ci comprend d'autres moyens pour mettre en œuvre le procédé selon l'une des revendications 2 à 14.
